# EUROPEAN PATENT APPLICATION

(11) **EP 4 513 907 A1**
(43) Date of publication of application: **26.02.2025**
(21) Application number: 23791096.3
(22) Date of filing: 12.04.2023
(51) Int. Cl.: H04W 4/06

(54) **SERVICE PROCESSING METHOD AND APPARATUS, TERMINAL DEVICE, AND NETWORK DEVICE**

(30) Priority: 22.04.2022 CN 202210432290
(71) Applicant: Datang Mobile Communications Equipment Co., Ltd., Beijing 100085 (CN)
(72) Inventor: ZHOU, Rui, Beijing 100085 (CN); ZENG, Erlin, Beijing 100085 (CN); LIANG, Jing, Beijing 100085 (CN); ZHOU, Ye, Beijing 100085 (CN)
(74) Representative: Maiwald GmbH
(86) International application number: PCT/CN2023/087783
(87) International publication number: WO 2023/202441

(57) **Abstract**

A method for service processing, an apparatus for service processing, a terminal, and a network device are provided, which relates to the field of communication technology. The method for service processing, performed by a terminal, includes: determining that the terminal is unable to receive a first multicast service in a radio resource control RRC _INACTIVE state, and transmitting an RRC resume request message to a network device; where the first multicast service is at least one of: that the terminal is interested in, or that the terminal has joined.

## Description

### CROSS-REFERENCE TO RELATED APPLICATION

This application claims a priority to Chinese Patent Application No. 202210432290.1 filed on April 22, 2022, which is incorporated in its entirety by reference herein.

### TECHNICAL FIELD

This application relates to the field of communication technology, in particular to a method for service processing, an apparatus for service processing, a terminal, and a network device.

### BACKGROUND

Multimedia broadcast multicast service (Multimedia Broadcast Multicast Service, MBMS), as an important service type, has existed for a long time in third generation (3rd Generation, 3G) and fourth generation (4th Generation, 4G) mobile communication technologies. However, in the fifth generation (5th Generation, 5G) new radio (New Radio, NR), only unicast services are supported. Given the importance of MBMS services to certain vertical domains (e.g., Internet of vehicles, public safety), 5G has also introduced support for MBMS (referred to in 5G as multicast broadcast service (Multicast Broadcast Service, MBS), which is called MBS in the discussion regarding 5G hereinafter).

MBS is divided into multicast services and broadcast services. A user equipment (User Equipment, UE, which is also referred to as terminal) in a radio resource control (Radio Resource Control, RRC) state is able to receive broadcast services. Multicast services are only supported to be received by the UE when it is in an RRC_connected state. Nevertheless, for some types of multicast services, such as those related to public safety, the quantity of UEs receiving these services may be large, and the capacity of the base station is limited, so it may not always be feasible to ensure that all UEs are in the RRC_connected state to receive the multicast services. Consequently, when the UE is in an RRC_INACTIVE state, how to ensure continuity of multicast service reception by the terminal needs to be considered.

### SUMMARY

Embodiments of this application provide a method for service processing, an apparatus for service processing, a terminal, and a network device, to solve the problem of discontinuity of multicast service reception by the UE in the RRC _INACTIVE state.

To solve the above technical problem, embodiments of this application provide a method for service processing, performed by a terminal, including:
determining that the terminal is unable to receive a first multicast service in a radio resource control (RRC) _INACTIVE state, and transmitting an RRC resume request message to a network device;
where the first multicast service is at least one of: that the terminal is interested in, or that the terminal has joined.

Optionally, determining that the first multicast service is unable to be received in the radio resource control (RRC)_INACTIVE state, and transmitting the RRC resume request message to the network device includes:
determining, after reselecting to a target cell, whether the terminal is able to receive the first multicast service when it is in the RRC _INACTIVE state; and
transmitting the RRC resume request message to the network device in a case that it is determined that the terminal is unable to receive the first multicast service when it is in the RRC _INACTIVE state.

Optionally, the determining whether the terminal is able to receive the first multicast service when it is in the RRC _INACTIVE state includes:
determining, in a case that the target cell satisfies a first condition, that the terminal is unable to receive the first multicast service when it is in the RRC _INACTIVE state;
where the first condition includes one or more of the following:
   not having multicast transmission capability; or,
   not supporting the terminal to receive the first multicast service.

Optionally, the non-support for the terminal to receive the first multicast service includes one of the following:
having multicast capability but not enabling transmission of the first multicast service;
that point-to-multipoint (point-to-multipoint, PTM) transmission is not available for the first multicast service; or,
not supporting the terminal to receive the first multicast service in the RRC _INACTIVE state.

Optionally, the determining that the terminal is unable to receive the first multicast service in the radio resource control (RRC) _INACTIVE state, and transmitting the RRC resume request message to the network device includes:
determining whether multicast service transmission of a first cell changes, where the first cell is a cell on which the terminal camps in RRC _INACTIVE state; and
transmitting the RRC resume request message to the network device in a case that it is determined that the multicast service transmission of the first cell changes.

Optionally, the determining whether the multicast service transmission of the first cell changes includes:
determining, in a case that the first cell satisfies a second condition, that the multicast service transmission of the first cell changes;
where the second condition includes one or more of the following:
   disabling transmission of the first multicast service; or,
   disabling a point-to-multipoint (PTM) transmission mode of the first multicast service.

Optionally, the RRC resume request message includes: information about interest of the terminal in multicast service;
where the information about interest includes one of the following:
identification information of the first multicast service; or,
indication information that the terminal is interested in the first multicast service or that the terminal has joined the first multicast service.

Optionally, after the transmitting the RRC resume request message to the network device, the method further includes:
receiving configuration information transmitted by the network device, where the configuration information is used for configuring the terminal to receive the first multicast service;
where the configuration information is used for configuring one of the following:
   the terminal to receive the first multicast service in an RRC_connected state; or,
   the terminal to receive the first multicast service in the RRC _INACTIVE state.

Embodiments of this application also provide a method for service processing, performed by a network device, including:
receiving a radio resource control (RRC) resume request message transmitted by a terminal, where the RRC resume request message is transmitted in a case that the terminal is unable to receive a first multicast service in an RRC_INACTIVE state, and the first multicast service is at least one of: that the terminal is interested in, or that the terminal has joined; and
transmitting an RRC resume message to the terminal based on the RRC resume request message.

Optionally, after the receiving the radio resource control (RRC) resume request message transmitted by the terminal, the method further includes:
obtaining context information about the terminal from an anchor base station, to obtain identification information of the first multicast service that the terminal has joined; or,
obtaining context information about a multicast broadcast service from an anchor base station, to obtain identification information of the first multicast service that the terminal has joined.

Embodiments of this application also provide a terminal, including a memory, a transceiver, and a processor;
the memory is configured to store a computer program, the transceiver is configured to transmit and receive data under control of the processor, and the processor is configured to read the computer program in the memory to perform following operation:
determining that the terminal is unable to receive a first multicast service in a radio resource control (RRC) _INACTIVE state, and transmitting an RRC resume request message to a network device via the transceiver;
where the first multicast service is at least one of: that the terminal is interested in, or that the terminal has joined.

Optionally, the processor is configured to read the computer program in the memory to perform following operation:
determining, after reselecting to a target cell, whether the terminal is able to receive the first multicast service when it is in the RRC _INACTIVE state; and
transmitting the RRC resume request message to the network device via the transceiver in a case that it is determined that the terminal is unable to receive the first multicast service when it is in the RRC _INACTIVE state.

Optionally, the processor is configured to read the computer program in the memory to perform following operation:
determining, in a case that the target cell satisfies a first condition, that the terminal is unable to receive the first multicast service when it is in the RRC_INACTIVE state;
where the first condition includes one or more of the following:
   not having multicast transmission capability; or,
   not supporting the terminal to receive the first multicast service.

Optionally, the processor is configured to read the computer program in the memory to perform following operation:
determining whether multicast service transmission of a first cell changes, where the first cell is a cell on which the terminal camps in RRC_INACTIVE state; and
transmitting the RRC resume request message to the network device in a case that it is determined that the multicast service transmission of the first cell changes.

Optionally, the processor is configured to read the computer program in the memory to perform following operation:
determining, in a case that the first cell satisfies a second condition, that the multicast service transmission of the first cell changes;
where the second condition includes one or more of the following:
   disabling transmission of the first multicast service; or,
   disabling a point-to-multipoint (PTM) transmission mode of the first multicast service.

Optionally, the processor is configured to read the computer program in the memory to further perform following operation:
receiving configuration information transmitted by the network device, where the configuration information is used for configuring the terminal to receive the first multicast service;
where the configuration information is used for configuring one of the following:
   the terminal to receive the first multicast service in an RRC_connected state; or,
   the terminal to receive the first multicast service in the RRC _INACTIVE state.

Embodiments of this application also provide a network device, including a memory, a transceiver, and a processor;
the memory is configured to store a computer program, the transceiver is configured to transmit and receive data under control of the processor, and the processor is configured to read the computer program in the memory to perform following operation:
receiving, via the transceiver, a radio resource control (RRC) resume request message transmitted by a terminal, where the RRC resume request message is transmitted in a case that the terminal is unable to receive a first multicast service in an RRC_INACTIVE state, and the first multicast service is at least one of: that the terminal is interested in, or that the terminal has joined; and
transmitting an RRC resume message to the terminal via the transceiver based on the RRC resume request message.

Embodiments of this application also provide an apparatus for service processing, applied to a terminal, including:
a first transmission unit, configured to determine that the terminal is unable to receive a first multicast service in a radio resource control (RRC) _INACTIVE state, and transmit an RRC resume request message to a network device;
where the first multicast service is at least one of: that the terminal is interested in, or that the terminal has joined.

Embodiments of this application also provide an apparatus for service processing, applied to a network device, including:
a first reception unit, configured to receive a radio resource control (RRC) resume request message transmitted by a terminal, where the RRC resume request message is transmitted in a case that the terminal is unable to receive a first multicast service in an RRC _INACTIVE state, and the first multicast service is at least one of: that the terminal is interested in, or that the terminal has joined; and
a second transmission unit, configured to transmit an RRC resume message to the terminal based on the RRC resume request message.

Embodiments of this application also provide a processor readable storage medium, having a computer program stored thereon, and the computer program is configured to cause the processor to perform the above method.

The beneficial effects of this application are as follows.

Based on the above solutions, in a case that the first multicast service is unable to be received in the RRC _INACTIVE state, the RRC resume request message is transmitted to the network device, to ensure that the terminal is able to receive the first multicast service smoothly, so as to ensure continuity of multicast service reception.

### BRIEF DESCRIPTION OF THE DRAWINGS

To better clarify technical solutions of embodiments of this application or in the related technologies, drawings used in descriptions of the embodiments or in the related technologies are briefly introduced hereinafter. Apparently, the described drawings merely illustrate some embodiments of this application. A person ordinary skilled in the art can obtain other drawings based on these drawings without any creative efforts.
FIG. 1 is a structural diagram of a network system applicable to embodiments of this application;
FIG. 2 is a first flow chart of a method for service processing according to embodiments of this application;
FIG. 3 is a first schematic diagram of a unit of an apparatus for service processing according to embodiments of this application;
FIG. 4 is a structural diagram of a terminal according to embodiments of this application;
FIG. 5 is a second flow chart of a method for service processing according to embodiments of this application;
FIG. 6 is a second schematic diagram of units of an apparatus for service processing according to embodiments of this application; and
FIG. 7 is a structural diagram of a network device according to embodiments of this application.

### DETAILED DESCRIPTION

The technical solutions in embodiments of this application are described clearly and completely in conjunction with drawings in the embodiments of this application. Apparently, the described embodiments are merely a part of rather than all the embodiments of this application. All other embodiments obtained by a person ordinary skilled in the art based on the embodiments of this application without any creative efforts fall within the protection scope of this application.

Terms such as "first" and "second" in the specification and the claims of this application are used to distinguish similar objects and are not necessarily used to describe a specific order or sequence. It should be understood that the terms used in this way may be interchanged under appropriate circumstances, so that the embodiments of this application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device.

The term "and/or" in the embodiments of this application describes an association relationship of associated objects, which indicates that there may be three types of relationships. For example, A and/or B may represent three situations: only A being included, both A and B being included, only B being included. The character "/" generally indicates that there is an "or" relationship between associated objects in front of it and behind it. The term "multiple" in the embodiments of this application refers to two or more than two, and other words for expressing quantities are similar to it.

In embodiments of this application, the expressions such as "exemplary" or "for example" are used to indicate an example, illustration, or description. Any embodiment or design solution described as "exemplary" or "for example" in the embodiments of this application should not be construed as being preferred or advantageous over other embodiments or design solutions. Rather, the use of the expressions such as "exemplary" or "for example" is intended to present the relevant concepts in a specific manner.

Embodiments of this application are described hereinafter in connection with the drawings. The method for service processing, the apparatus for service processing, the terminal, and the network device according to embodiments of this application may be applied to a radio communication system. The radio communication system may be a system employing a fifth generation (5th Generation, 5G) mobile communication technology (hereinafter referred to as a 5G system), and it can be understood by those skilled in the art that the 5G NR system is only an example and is not a limitation.

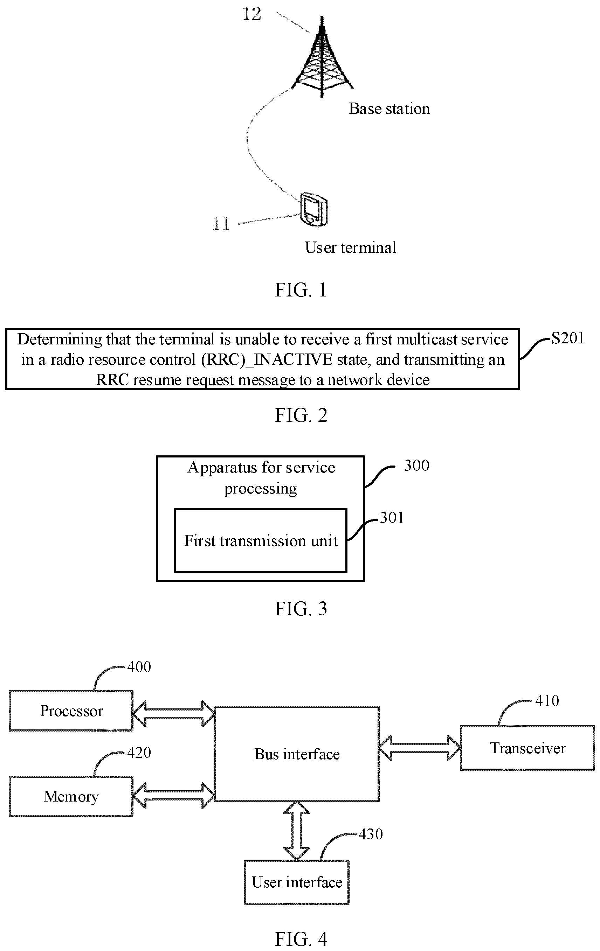

Reference is made to FIG. 1. FIG. 1 is a structural diagram of a network system to which embodiments of this application may be applied. As shown in FIG. 1, the network system includes a user terminal 11 and a base station 12, the user terminal 11 may be a user equipment (User Equipment, UE). For example, it may be a cellular phone, a tablet personal computer (Tablet Personal Computer), a laptop computer ( Laptop Computer), a personal digital assistant (personal digital assistant, PDA), a mobile Internet device (Mobile Internet Device, MID), or a wearable device (Wearable Device) or other terminal-side devices. It should be noted that in the embodiments of this application, the specific type of the user terminal 11 is not limited in the embodiments of this application. The above-mentioned base station 12 may be a base station of 5G or of a later version (e.g., gNB, or 5G NR NB), or a base station in other communication systems, or referred to as a node B. It should be noted that in the embodiments of this application, a 5G base station is only taken as an example, and the specific type of the base station 12 is not limited.

Based on the analysis, embodiments of this application provide a method for service processing, an apparatus for service processing, a terminal, and a network device, to solve the problem that discontinuity of multicast service reception may be caused in a situation where the UE in the RRC _INACTIVE state may be unable to continue to receive the multicast service in the current cell or in a new cell that it is about to move to.

Methods and devices are based on the same application concept. Since the principles of solving problems in methods and devices are similar, for implementations of the devices and the methods, reference can be made to each other, the repetition of which is not described again herein.

As shown in FIG. 2, embodiments of this application provide a method for service processing, performed by a terminal, including the following step.

Step S201 includes: determining that the terminal is unable to receive a first multicast service in a radio resource control (RRC)_INACTIVE state, and transmitting an RRC resume request message to a network device.

The first multicast service is at least one of: that the terminal is interested in, or that the terminal has joined.

It should be noted that the multicast service of interest may also be understood as a multicast service that the terminal intends to receive. The multicast service that has been joined may be understood to be a multicast service whose reception the terminal is currently engaged in. For example, the terminal is in a connected state and has joined the multicast service 1, and then the terminal enters an RRC_INACTIVE state due to the movement of the terminal; in a case that the terminal is unable to receive the multicast service 1 in the RRC _INACTIVE state, an RRC resume process needs to be triggered, and an RRC resume request message is transmitted to the network device.

In the embodiments of this application, in a case that a specific multicast service is unable to be received in the RRC _INACTIVE state, the RRC resume request message is transmitted to the network device, i.e., triggering an RRC resume process, to ensure that the terminal is able to receive the specific multicast service smoothly, so as to ensure continuity of reception of the specific multicast service.

Optionally, in at least one embodiment of this application, a specific implementation of step S201 includes following steps.

Step S2011 includes: determining, after reselecting to a target cell, whether the terminal is able to receive the first multicast service when it is in the RRC _INACTIVE state.

Optionally, in at least one embodiment of this application, this step is implemented as:
determining, in a case that the target cell satisfies a first condition, that the terminal is unable to receive the first multicast service when it is in the RRC_INACTIVE state.

The first condition includes one or more of the following:
A11: not having multicast transmission capability.

That is, the target cell that the terminal reselects to is not capable of performing multicast transmission.

A12: not supporting the terminal to receive the first multicast service.

Optionally, the non-support for the terminal to receive the first multicast service includes one of the following:
A121: having multicast capability but not enabling transmission of the first multicast service.

This case represents that: the target cell is capable of transmitting the first multicast service, but the target cell is not transmitting the first multicast service when the terminal reselects to the target cell.

A122: that point-to-multipoint (point-to-multipoint, PTM) transmission is not available for the first multicast service.

This case represents that: when the terminal reselects to the target cell, the target cell is transmitting the first multicast service, but it is using a non-PTM mode (e.g., using a point-to-point (point-to-point, PTP) mode) to transmit the first multicast service.

A123: not supporting the terminal to receive the first multicast service in the RRC _INACTIVE state.

Optionally, the target cell is transmitting the first multicast service by using the PTM mode, but does not support the terminal to receive the first multicast service in the RRC _INACTIVE state.

That is, when the terminal reselects and accesses the target cell, the target cell is transmitting the first multicast service in the PTM mode, but the target cell does not support the terminal to receive the first multicast service in the RRC_INACTIVE state.

For example, the terminal camps on cell 1 and is in the RRC_INACTIVE state; when the terminal performs cell reselection due to movement, it reselects to cell 2 for camping, but the target cell does not support the terminal to receive the first multicast service in the RRC _INACTIVE state, then, when the terminal camps on cell 2, it is unable to receive the first multicast service in the RRC _INACTIVE state.

Step S2012 includes: transmitting the RRC resume request message to the network device in a case that it is determined that the terminal is unable to receive the first multicast service when it is in the RRC _INACTIVE state.

Optionally, the terminal may transmit, in a target cell that it reselects to, the resume request message to the network device, and the network device is a network device to which the target cell belongs, or, it may be understood that the target cell is a cell included under the network device. Optionally, the RRC resume request message may carry a cell identity of the target cell.

Optionally, in at least one embodiment of this application, a specific implementation of step S201 includes the following steps.

Step S2013 includes: determining whether multicast service transmission of a first cell changes, where the first cell is a cell on which the terminal camps in RRC _INACTIVE state.

Optionally, in at least one embodiment of this application, this step is implemented as:
determining, in a case that the first cell satisfies a second condition, that the multicast service transmission of the first cell changes.

The second condition includes one or more of the following:
B11: disabling transmission of the first multicast service.

This situation represents that: the first cell supports the transmission of the first multicast service, but the transmission of the first multicast service is disabled.

B12: disabling a point-to-multipoint (PTM) transmission mode of the first multicast service.

Optionally, disabling the PTM transmission mode of the first multicast service may be understood as that the PTM transmission mode of the first multicast service has already been disabled. That is, the first cell supports transmission of the first multicast service and also supports the PTM mode, but the PTM mode transmission is currently disabled.

Optionally, disabling the PTM transmission mode of the first multicast service may be understood as that the first multicast service is to be disabled (i.e., it is about to be disabled after a preset period of time). That is, the first cell supports multicast transmission and also supports the PTM mode, but the PTM mode transmission of multicast is to be disabled.

Step S2014 includes: transmitting the RRC resume request message to the network device in a case that it is determined that the multicast service transmission of the first cell changes.

Optionally, the terminal may transmit, in the first cell on which it camps, the resume request message to the network device, and the network device is a network device to which the first cell belongs, or, it may be understood that the first cell is a cell included under the network device. Optionally, the RRC resume request message may carry a cell identity of the first cell.

Optionally, the resume request message transmitted by the terminal to the network device may not carry information related to multicast, for example, it may not carry information about interest of the terminal in the multicast service; upon receiving the resume request message, the network device may obtain the context information about the terminal from the anchor base station, to obtain identification information of the first multicast service to which the terminal has already joined. It should be noted that the anchor base station refers to a serving base station for the terminal when it initially enters the RRC_INACTIVE state from the RRC_connected state.

Optionally, the resume request message transmitted by the terminal to the network device may carry information about interest of the terminal in multicast service.

Optionally, the information about interest includes one of the following:
C11: identification information of the first multicast service.

It should be noted that in such a case, the terminal has already informed the network device of the identification information of the first multicast service, and then there is no need for the network device to obtain the identification information of the first multicast service from the anchor base station of the terminal.

C12: indication information that the terminal is interested in the first multicast service or that the terminal has joined the first multicast service.

It should be noted that in such a case, the terminal does not directly notify the network device of the identification information of the first multicast service, and the network device needs to obtain the context information about a multicast broadcast service from the anchor base station of the terminal, to obtain the identification information of the first multicast service to which the terminal has joined.

Optionally, after obtaining the identification information of the first multicast service, the network device may configure the first multicast service for the terminal; optionally, the network device transmits configuration information to the terminal, where the configuration information is used for configuring the terminal to receive the first multicast service; after receiving the configuration information, the terminal may perform reception of the first multicast service based on the configuration information.

Optionally, the configuration information is used for configuring one of the following:
D11: the terminal to receive the first multicast service in an RRC_connected state.

For example, the terminal accesses cell 1, and has joined the multicast service A in the RRC_connected state; then the terminal reselects to cell 2 due to the movement of the terminal, and enters the RRC_INACTIVE state, at this time, the terminal is unable to receive the multicast service A. Then, the terminal transmits, in cell 2, a resume request message to cell 2 (which may also be understood as transmitting a resume request message to a network device to which cell 2 belongs), and the resume request message carries identification information of the multicast service A; cell 2 configures, based on the identification information of the multicast service A, the terminal to access the multicast service A in the RRC_connected state, and the terminal continues to receive the multicast service A in the RRC_connected state.

D12: the terminal to receive the first multicast service in the RRC _INACTIVE state.

That is, in this case, it is configured that the first multicast service is able to be transmitted in the RRC _INACTIVE state.

For example, the terminal accesses the cell 3, and has joined the multicast service B in the RRC_connected state; the terminal reselects to the cell 4 due to the movement of terminal, and enters the RRC _INACTIVE state, at this time, the terminal is no longer able to receive the multicast service B. Then the terminal transmits, in cell 4, a resume request message to cell 4 (which may also be understood as transmitting a resume request message to the network device to which cell 4 belongs), and the resume request message carries indication indicating that the terminal has joined the multicast service B; cell 4 obtains context of the MBS from the anchor base station of the terminal, to obtain the identification information of the multicast service A that has been joined by the terminal, and configures transmission in the RRC _INACTIVE state for the multicast service A, that is, the terminal receives configuration in an RRC_connected state first, and then switches back to the RRC _INACTIVE state to receive the multicast service A.

Optionally, the configuration information of the network device may be carried in the RRC resume message transmitted to the terminal, or may be transmitted in an RRC message after the terminal enters the RRC_connected state.

Specific applications of at least one embodiment of this application are described in detail hereinafter by taking communication between the UE and the base station as an example.

First specific application: when being unable to receive a multicast service in the RRC _INACTIVE state, the UE triggers an RRC resume process

Specifically, the process includes the following process.

In step S11, the UE is in the RRC_INACTIVE state, and when the UE is unable to receive the multicast service in the RRC _INACTIVE state, it triggers the RRC resume process and transmits an RRC resume request message to the base station.

In step S12: after receiving the RRC resume request message from the UE, the base station obtains context about the UE from the anchor base station, and obtains from the context the multicast service that the UE has joined.

In step S13: the base station ensures, by using one of the following manners, that the UE continues to receive the multicast service:
1. configuring the UE to receive the multicast service in the RRC_connected state;
2. transmitting configuration that supports the UE to receive the multicast session of the multicast service in the RRC _INACTIVE state, and switching the UE back to the RRC _INACTIVE state to receive the multicast session of the multicast service.

Second specific application: when being unable to receive a multicast service in the RRC _INACTIVE state, the UE triggers an RRC resume process, and the resume request message includes the identification information of the multicast service that the UE is interested in.

Specifically, the following process is included.

In step S21, the UE is in the RRC_INACTIVE state, and when the UE is unable to receive the multicast service in the RRC_INACTIVE state, it triggers the RRC resume process and transmits an RRC resume request message to the base station, and the message includes identification information of the multicast service that the UE is interested in.

In step S22: after receiving the RRC resume request message from the UE, the base station obtains from the RRC resume request message the multicast service that the UE is interested in.

In step S23: the base station ensures, by using one of the following manners, that the UE continues to receive the multicast service that the UE is interested in:
1. configuring the UE to receive, in the RRC_connected state, the multicast service that the UE is interested in.
2. transmitting configuration that supports the UE to receive in the RRC _INACTIVE state the multicast session of the multicast service that the UE is interested in, and switching the UE back to the RRC _INACTIVE state to receive the multicast session of the multicast service that the UE is interested in.

Third specific application: when it is unable to receive a multicast service in the RRC _INACTIVE state, an RRC resume process is triggered, and it is indicated that the UE is interested in the multicast service or that the UE has joined the multicast service.

Specifically, the following process is included.

In step S31, the UE is in the RRC_INACTIVE state; when the UE is unable to receive the multicast service in the RRC _INACTIVE state, it triggers the RRC resume process and transmits an RRC resume request message to the base station, and the message carries indication information that the UE is interested in the multicast service or that the UE has joined the multicast service.

In step S32: after receiving the RRC resume request message from the UE, the base station obtains from the RRC resume request message the indication information that the UE is interested in the multicast service or that the UE has joined the multicast service, and the base station obtains the MBS context from the anchor base station of the UE, and obtains the identification information of the multicast service that the UE has joined.

In step S33: the base station ensures, by using one of the following manners, that the UE continues to receive the multicast service:
1. configuring the UE to receive the multicast service in the RRC_connected state;
2. transmitting configuration that supports the UE to receive the multicast session of the multicast service in the RRC_INACTIVE state, and switching the UE back to the RRC _INACTIVE state to receive the multicast session of the multicast service.

It should be noted that, according to at least one embodiment of this application, in a case that the UE is in the RRC _INACTIVE state and the UE is unable to receive in the RRC _INACTIVE state the multicast service that it is interested in or has joined, it triggers the RRC resume process to obtain the configuration of the multicast service transmission, so as to continue to receive the multicast service, which ensures continuity of multicast service reception by the UE.

The technical solutions in the embodiments of this application may be applied to various systems, especially 5G systems. For example, the applicable system may be a global system of mobile communication (Global System of Mobile Communication, GSM) system, a code division multiple access (Code Division Multiple Access, CDMA) system, a wideband code division multiple access (Wideband Code Division Multiple Access, WCDMA) system, a general packet radio service (general packet radio service, GPRS) system, a long term evolution (Long Term Evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system, etc. These systems each include a terminal and a network device. The system may also include a core network part, such as an evolved packet system (Evolved Packet System, EPS), a 5G system (5GS), etc.

The terminal involved in the embodiments of the present application may refers to a device that provides voice and/or data connectivity to a user, a handheld device with a wireless connection function, or other processing devices connected to a wireless modem. In different systems, the name of the terminal may be different. For example, in 5G systems, the terminal may be referred to as a user equipment (User Equipment, UE). A wireless terminal may communicate with one or more core networks (Core Network, CN) through a radio access network (Radio Access Network, RAN). The wireless terminal may be a mobile terminal, such as a mobile phone (or referred to as a "cellular" phone) or a computer with a mobile terminal, for example, it may be a portable, pocket type, handheld, computer built-in, or vehicle mounted mobile device, which exchanges languages and/or data with a radio access network. For example, it may be a personal communication service (Personal Communication Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), or other devices. Or the wireless terminal may be referred to as a system, a subscriber unit (subscriber unit), a subscriber station (subscriber station), a mobile station (mobile station), a mobile (mobile), a remote station (remote station), an access point (access point), a remote terminal (remote terminal), an access terminal (access terminal), a user terminal (user terminal), a user agent (user agent), or a user device (user device),which is not limited in the embodiments of this application.

The network device involved in the embodiments of the present application may be a base station, and the base station may have multiple cells providing services for terminals. According to different application scenarios, the base station may also be referred to as an access point, or may be a device in an access network that communicates with wireless terminals through one or more sectors on air interfaces, or may have other names. The network device may be configured to exchange received air frames and Internet protocol (Internet Protocol, IP) packets, serving as a router between the wireless terminals and rest of the access network, where the rest of the access network may include an Internet Protocol (IP) communication network. The network device may also coordinate attribute management of air interfaces. For example, the network device involved in the embodiments of this application may be a network device(Base Transceiver Station, BTS) in a global system for mobile communications (Global System for Mobile Communications, GSM) or a code division multiple access (Code Division Multiple Access, CDMA), or may be a network device (NodeB) in wide-band code division multiple access (Wide-band Code Division Multiple Access, WCDMA), or may be an evolutional network device (evolutional Node B, eNB or e-NodeB) in a long term evolution (Long Term Evolution, LTE) system or a 5G base station (gNB) in a 5G network architecture (next generation system), or may be a home evolved node B (Home evolved Node B, HeNB),a relay node (relay node), a femto (femto), a pico (pico), etc., which is not limited in the embodiments of this application. In some network structures, the network device may include a centralized unit (centralized unit, CU) node and a distributed unit (distributed unit, DU) node, and the centralized unit and the distributed unit may be geographically separated.

The network device and the terminal may each use one or more antennas to perform multi input multi output (Multi Input Multi Output, MIMO) transmission, where the MIMO transmission may be single user MIMO (Single User MIMO, SU-MIMO) or multiple user MIMO (Multiple User MIMO, MU-MIMO). According to the form and the quantity of the antenna combination, the MIMO transmission may be 2-dimension MIMO (2D-MIMO), 3-dimension MIMO (3D-MIMO), full dimension MIMO (FD-MIMO), or massive MIMO (massive-MIMO), or may be diversity transmission, or precoding transmission, or beamforming transmission, etc.

As shown in FIG. 3, embodiments of this application provide an apparatus 300 for service processing, applied to a terminal, including:
a first transmission unit 301, configured to determine that the terminal is unable to receive a first multicast service in a radio resource control (RRC) _INACTIVE state, and transmit an RRC resume request message to a network device;
where the first multicast service is at least one of: that the terminal is interested in, or that the terminal has joined.

Optionally, the first transmission unit 301 is configured to:
determine, after reselecting to a target cell, whether the terminal is able to receive the first multicast service when it is in the RRC _INACTIVE state; and
transmit the RRC resume request message to the network device in a case that it is determined that the terminal is unable to receive the first multicast service when it is in the RRC _INACTIVE state.

Optionally, determining whether the terminal is able to receive the first multicast service when it is in the RRC _INACTIVE state is specifically implemented as:
determining, in a case that the target cell satisfies a first condition, that the terminal is unable to receive the first multicast service when it is in the RRC _INACTIVE state;
where the first condition includes one or more of the following:
   not having multicast transmission capability; or,
   not supporting the terminal to receive the first multicast service.

Optionally, the non-support for the terminal to receive the first multicast service includes one of the following:
having multicast capability but not enabling transmission of the first multicast service;
that point-to-multipoint (point-to-multipoint, PTM) transmission is not available for the first multicast service; or,
not supporting the terminal to receive the first multicast service in the RRC_INACTIVE state.

Optionally, the first transmission unit 301 is configured to:
determine whether multicast service transmission of a first cell changes, where the first cell is a cell on which the terminal camps in RRC _INACTIVE state; and
transmit the RRC resume request message to the network device in a case that it is determined that the multicast service transmission of the first cell changes.

Optionally, determining whether the multicast service transmission of the first cell changes is specifically implemented as:
determining, in a case that the first cell satisfies a second condition, that the multicast service transmission of the first cell changes;
where the second condition includes one or more of the following:
   disabling transmission of the first multicast service; or,
   disabling a point-to-multipoint (PTM) transmission mode of the first multicast service.

Optionally, the RRC resume request message includes: information about interest of the terminal in multicast service;
where the information about interest includes one of the following:
identification information of the first multicast service; or,
indication information that the terminal is interested in the first multicast service or that the terminal has joined the first multicast service.

Optionally, after transmitting the RRC resume request message to the network device, the apparatus further includes:
a second reception unit, configured to receive configuration information transmitted by the network device, where the configuration information is used for configuring the terminal to receive the first multicast service;
where the configuration information is used for configuring one of the following:
   the terminal to receive the first multicast service in an RRC_connected state; or,
   the terminal to receive the first multicast service in the RRC _INACTIVE state.

It should be noted that the apparatus embodiments are in a one-to-one correspondence with the above method embodiments, all the implementations in the above method embodiments are applicable to the apparatus embodiments, and the same technical effects can be achieved.

It should be noted that the division of units in the embodiments of this application is schematic and only serves as a division of logical functions, and there may be other division methods. In addition, in the embodiments of the present application, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present application, or the part contributing to the related technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present application. The storage medium includes a USB flash disk, a mobile hard disk, a read-only memory (Read-Only Memory, ROM), a random access memory (Random Access Memory, RAM), a magnetic disk, an optical disk, or other medium which can store program code.

As shown in FIG. 4, embodiments of this application also provide a user equipment, including a processor 400, a transceiver 410, a memory 420, and a program stored in the memory 420 and executable by the processor 400; the transceiver 410 is connected to the processor 1400 and the memory 420 via a bus interface, the processor 400 is configured to read the program in the memory to perform the following process:
determining that the terminal is unable to receive a first multicast service in a radio resource control (RRC)_INACTIVE state, and transmitting an RRC resume request message to a network device via the transceiver 410;
where the first multicast service is at least one of: that the terminal is interested in, or that the terminal has joined.

The transceiver 410 is configured to transmit and receive data under control of the processor 400.

In FIG. 4, a bus architecture may include any quantity of interconnected buses and bridges. Various circuits including one or more processors represented by the processor 400 and a memory represented by the memory 420 are linked. The bus architecture may further link various other circuits together, such as a periphery component, a voltage stabilizer and a power management circuit, which are known in the art and are not further described herein. A bus interface provides an interface. The transceiver 410 may be multiple elements, i.e., including a transmitter and a receiver, providing a unit for communicating with various other devices on transmission media. The transmission media include a wireless channel, a wired channel, an optical cable, or other transmission media. For different user equipments, the user interface 430 may be an interface capable of connecting externally and internally with the required equipment. The connected equipment includes but not limited to a keypad, a display, a speaker, a microphone, a joystick, etc.

The processor 400 is in charge of managing the bus architecture and common processes. The memory 420 may store data used by the processor 400 in performing operations.

Optionally, the processor 400 may be a CPU (Central Processing Device), an ASIC (Application Specific Integrated Circuit), a FPGA (Field Programmable Gate Array), or a CPLD (Complex Programmable Logic Device), or the processor may adopt a multi-core architecture.

The processor is configured to execute any of the methods in the embodiments of the present application according to obtained executable instructions by calling the computer program stored in the memory. The processor and the memory may be physically arranged separately.

Optionally, the processor is configured to read the computer program in the memory to perform following operation:
determining, after reselecting to a target cell, whether the terminal is able to receive the first multicast service when it is in the RRC _INACTIVE state; and
transmitting the RRC resume request message to the network device via the transceiver in a case that it is determined that the terminal is unable to receive the first multicast service when it is in the RRC _INACTIVE state.

Optionally, the processor is configured to read the computer program in the memory to perform following operation:
determining, in a case that the target cell satisfies a first condition, that the terminal is unable to receive the first multicast service when it is in the RRC _INACTIVE state;
where the first condition includes one or more of the following:
   not having multicast transmission capability; or,
   not supporting the terminal to receive the first multicast service.

Optionally, the non-support for the terminal to receive the first multicast service includes one of the following:
having multicast capability but not enabling transmission of the first multicast service;
that point-to-multipoint (point-to-multipoint, PTM) transmission is not available for the first multicast service; or,
not supporting the terminal to receive the first multicast service in the RRC _INACTIVE state.

Optionally, the processor is configured to read the computer program in the memory to perform following operation:
determining whether multicast service transmission of a first cell changes, where the first cell is a cell on which the terminal camps in RRC _INACTIVE state; and
transmitting the RRC resume request message to the network device in a case that it is determined that the multicast service transmission of the first cell changes.

Optionally, the processor is configured to read the computer program in the memory to perform following operation:
determining, in a case that the first cell satisfies a second condition, that the multicast service transmission of the first cell changes;
where the second condition includes one or more of the following:
   disabling transmission of the first multicast service; or,
   disabling a point-to-multipoint (PTM) transmission mode of the first multicast service.

Optionally, the RRC resume request message includes: information about interest of the terminal in multicast service;
where the information about interest includes one of the following:
identification information of the first multicast service; or,
indication information that the terminal is interested in the first multicast service or that the terminal has joined the first multicast service.

Optionally, the processor is configured to read the computer program in the memory to further perform following operation:
receiving configuration information transmitted by the network device, where the configuration information is used for configuring the terminal to receive the first multicast service;
where the configuration information is used for configuring one of the following:
   the terminal to receive the first multicast service in an RRC_connected state; or,
   the terminal to receive the first multicast service in the RRC_INACTIVE state.

At least one embodiment of this application also provides a terminal, including a memory, a processor, and a computer program stored in the memory and executable by the processor, the processor, when executing the program, performs various processes in the embodiments of the method for service processing applied to the terminal, and same technical effects can be achieved, the repetition of which is not provided herein.

At least one embodiment of this application also provides a computer readable storage medium, having a computer program stored thereon, and the computer program, when being executed by a processor, performs various processes in the embodiments of the method for service processing applied to the terminal, and same technical effects can be achieved, the repetition of which is not provided herein. The computer readable storage medium may be a read-only memory (Read-Only Memory, ROM), a random access memory (Random Access Memory, RAM), a disk or a CD-ROM.

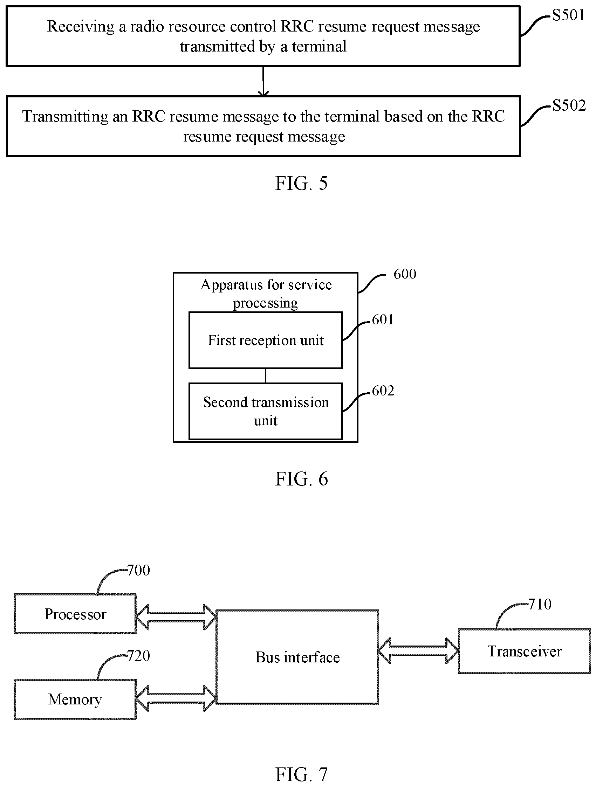

Corresponding to the implementations of the terminal side, as shown in FIG. 5, embodiments of this application provide a method for service processing, performed by a network device, which includes the following steps.

Step S501 includes: receiving a radio resource control (RRC) resume request message transmitted by a terminal, where the RRC resume request message is transmitted in a case that the terminal is unable to receive a first multicast service in an RRC_INACTIVE state, and the first multicast service is at least one of: that the terminal is interested in, or that the terminal has joined.

Step S502 includes: transmitting an RRC resume message to the terminal based on the RRC resume request message.

Optionally, after the receiving the radio resource control (RRC) resume request message transmitted by the terminal, the method further includes:
obtaining context information about the terminal from an anchor base station, to obtain identification information of the first multicast service that the terminal has joined; or,
obtaining context information about a multicast broadcast service from an anchor base station, to obtain identification information of the first multicast service that the terminal has joined.

Optionally, the RRC resume request message includes: information about interest of the terminal in multicast service;
where the information about interest includes one of the following:
identification information of the first multicast service; or,
indication information that the terminal is interested in the first multicast service or that the terminal has joined the first multicast service.

Optionally, in a case that the information about interest includes the indication information that the terminal is interested in the first multicast service or that the terminal has joined the first multicast service, the network device needs to obtain context information about a multicast broadcast service from an anchor base station, to obtain identification information of the first multicast service that the terminal has joined.

Optionally, the method further includes:
transmitting configuration information to the terminal, where the configuration information is used for configuring the terminal to receive the first multicast service;
where the configuration information is used for configuring one of the following:
   the terminal to receive the first multicast service in an RRC_connected state; or,
   the terminal to receive the first multicast service in the RRC_INACTIVE state.

It should be noted that all the descriptions in the above embodiments are applicable to the embodiments of the method for service processing applied to the network device side, and the same technical effects as thereof can also be achieved.

As shown in FIG. 6, embodiments of this application also provide an apparatus 600 for service processing, applied to a network device, including:
a first reception unit 601, configured to receive a radio resource control (RRC) resume request message transmitted by a terminal, where the RRC resume request message is transmitted in a case that the terminal is unable to receive a first multicast service in an RRC _INACTIVE state, and the first multicast service is at least one of: that the terminal is interested in, or that the terminal has joined; and
a second transmission unit 602, configured to transmit an RRC resume message to the terminal based on the RRC resume request message.

Optionally, after the first reception unit 601 receives the radio resource control (RRC) resume request message transmitted by the terminal, the apparatus further includes:
a first obtaining unit, configured to obtain context information about the terminal from an anchor base station, to obtain identification information of the first multicast service that the terminal has joined; or,
a second obtaining unit, configured to obtain context information about a multicast broadcast service from an anchor base station, to obtain identification information of the first multicast service that the terminal has joined.

Optionally, the RRC resume request message includes: information about interest of the terminal in multicast service;
where the information about interest includes one of the following:
identification information of the first multicast service; or,
indication information that the terminal is interested in the first multicast service or that the terminal has joined the first multicast service.

Optionally, in a case that the information about interest includes the indication information that the terminal is interested in the first multicast service or that the terminal has joined the first multicast service, the second obtaining unit needs to obtain context information about a multicast broadcast service from an anchor base station, to obtain identification information of the first multicast service that the terminal has joined.

Optionally, the apparatus further includes:
a third transmission unit, configured to transmit configuration information to the terminal, where the configuration information is used for configuring the terminal to receive the first multicast service;
where the configuration information is used for configuring one of the following:
   the terminal to receive the first multicast service in an RRC_connected state; or,
   the terminal to receive the first multicast service in the RRC _INACTIVE state.

It should be noted that the apparatus according to the embodiments of this application can perform the method for service processing described in the above, all the embodiments of the method for service processing described in the above are applicable to the apparatus embodiments, which can achieve the same or similar beneficial effects.

It should be noted that the division of units in the embodiments of this application is schematic and only serves as a division of logical functions, and there may be other division methods. In addition, in the embodiments of the present application, various functional units may be integrated into a single processing unit, or the various units may be physically separated, or two or more units may be integrated into one unit. The integrated unit in the above may be implemented in the form of hardware or may be implemented in the form of software functional units.

If the integrated unit is implemented in the form of software functional units and sold or used as an independent product, it may be stored in a processor readable storage medium. Based on this understanding, essence of the technical solutions of the present application, or the part contributing to the related technologies, or part or all of the technical solutions, may be embodied in the form of a software product. The computer software product is stored in a storage medium, and includes a number of instructions to enable a computer device (which may be a personal computer, a server, or a network device, etc.) or a processor (processor) to perform all or part of the steps of method described in the various embodiments of the present application. The storage medium includes a USB flash disk, a mobile hard disk, a read-only memory (Read-Only Memory, ROM), a random access memory (Random Access Memory, RAM), a magnetic disk, an optical disk, or other medium which can store program code.

As shown in FIG. 7, embodiments of this application also provide a network device, including a processor 700, a transceiver 710, a memory 720, and a program stored in the memory 720 and executable by the processor 700; the transceiver 710 is connected to the processor 700 and the memory 720 via a bus interface, the processor 700 is configured to read the program in the memory to perform the following process:
receiving, via the transceiver 710, a radio resource control (RRC) resume request message transmitted by a terminal, where the RRC resume request message is transmitted in a case that the terminal is unable to receive a first multicast service in an RRC _INACTIVE state, and the first multicast service is at least one of: that the terminal is interested in, or that the terminal has joined; and
transmitting an RRC resume message to the terminal via the transceiver 710 based on the RRC resume request message.

In FIG. 7, a bus architecture may include any quantity of interconnected buses and bridges. Various circuits including one or more processors represented by the processor 700 and a memory represented by the memory 720 are linked. The bus architecture may further link various other circuits together, such as a periphery component, a voltage stabilizer and a power management circuit, which are known in the art and are not further described herein. A bus interface provides an interface. The transceiver 710 may be multiple elements, i.e., including a transmitter and a receiver, providing a unit for communicating with various other devices on transmission media. The transmission media include a wireless channel, a wired channel, an optical cable, or other transmission media. The processor 700 is in charge of managing the bus architecture and common processes. The memory 720 may store data used by the processor 700 in performing operations.

Optionally, the processor 700 may be a CPU (Central Processing Device), an ASIC (Application Specific Integrated Circuit), a FPGA (Field Programmable Gate Array), or a CPLD (Complex Programmable Logic Device), or the processor may adopt a multi-core architecture.

Optionally, the processor is configured to read the computer program in the memory to further perform following operation:
obtaining context information about the terminal from an anchor base station, to obtain identification information of the first multicast service that the terminal has joined; or,
obtaining context information about a multicast broadcast service from an anchor base station, to obtain identification information of the first multicast service that the terminal has joined.

Optionally, the RRC resume request message includes: information about interest of the terminal in multicast service;
where the information about interest includes one of the following:
identification information of the first multicast service; or,
indication information that the terminal is interested in the first multicast service or that the terminal has joined the first multicast service.

Optionally, the processor is configured to read the computer program in the memory to further perform following operation:
transmitting configuration information to the terminal via the transceiver 710, where the configuration information is used for configuring the terminal to receive the first multicast service;
where the configuration information is used for configuring one of the following:
   the terminal to receive the first multicast service in an RRC_connected state; or,
   the terminal to receive the first multicast service in the RRC _INACTIVE state.

It should be noted that the network device according to the embodiments of this application can realize all the method steps in the method embodiments, and the same technical effects can be realized. The same parts of the present embodiments as the method embodiments, and the beneficial effects, are not repeated herein.

Embodiments of this application also provide a computer readable storage medium, having a computer program stored thereon, and the computer program, when being executed by a processor, performs various processes in the method for service processing applied to the network device. The readable storage medium may be any available medium or data storage device that the processor may access, including but not limited to a magnetic memory (such as a floppy disk, a hard disk, a magnetic tape, a magneto-optical disk (MO), etc.), an optical memory (such as a compact disk (CD), a digital video disc (DVD), a Blu-ray disc (BD), a high-definition versatile disc (HVD), etc.), or a semiconductor memory (such as a ROM, an erasable programmable read-only memory (EPROM), an electrically erasable programmable read-only memory (EEPROM), a non-volatile memory (NAND FLASH), a solid state disk (SSD)).

It should be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, the determination module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits configured to implement the above methods, such as one or more application specific integrated circuits (Application Specific Integrated Circuit, ASIC), or one or more microprocessors (Digital Signal Processor, DSP), or one or more field programmable gate arrays (Field Programmable Gate Array, FPGA), etc. As another example, when a module described above is implemented in the form of scheduling program codes by a processing element, the processing element may be a general purpose processor, such as a central processing unit (Central Processing Unit, CPU) or other processors that may call program codes. As another example, these modules may be integrated together and implemented as a system-on-a-chip (system-on-a-chip, SOC).

Terms such as "first" and "second" in the specification and the claims of this application are used to distinguish similar objects and are not necessarily used to describe a specific order or sequence. It should be understood that the terms used in this way may be interchanged under appropriate circumstances, so that the embodiments of this application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device.

A person skilled in the art should understand that the embodiments of this application may be provided as methods, systems, or computer program products. Therefore, this application may adopt the form of complete hardware embodiments, complete software embodiments, or embodiments combining software and hardware aspects. Moreover, this application may adopt the form of a computer program product implemented on one or more computer available storage media (including but not limited to a disk storage, an optical storage, etc.) containing computer available program code.

This application is described with reference to flowcharts and/or block diagrams of methods, devices (systems), and computer program products according to the embodiments of this application. It should be understood that each process and/or block in the flowchart and/or block diagram, and the combination of processes and/or blocks in the flowchart and/or block diagram may be implemented by computer executable instructions. These computer executable instructions may be provided to a general-purpose computer, a special-purpose computer, an embedded processor, or a processor of other programmable data processing device to generate a machine, so that a device, which is configured to implement functions specified in one process or multiple processes in the flowchart and/or one block or multiple blocks in the block diagram, is generated through the instructions executed by the computer or the processor of other programmable data processing device.

These processor executable instructions may be stored in a processor readable memory that may guide a computer or other programmable data processing device to operate in a specific manner, so that the instructions stored in the processor readable memory generate a product including an instruction device. The instruction device implements the functions specified in one process or multiple processes in the flowchart and/or one block or multiple blocks in the block diagram.

These processor executable instructions may be loaded in a computer or other programmable data processing device, to enable a series of operation steps to be executed on the computer or other programmable equipment to realize computer-implemented processing, so that the instructions executed on the computer or other programmable device provide steps for implementing functions specified in a process or multiple processes in the flowchart and/or a block or multiple blocks in the block diagram.

Apparently, those skilled in the art may make various modifications and variations to this application, without departing from the spirit and scope of this application. In this case, if the modifications and variations of this application fall within the scope of the claims of this application and their equivalent techniques, this application is intended to include these modifications and variations.

## Claims

1. A method for service processing, performed by a terminal, comprising:
determining that the terminal is unable to receive a first multicast service in a radio resource control (RRC) _INACTIVE state, and transmitting an RRC resume request message to a network device;
wherein the first multicast service is at least one of: that the terminal is interested in, or that the terminal has joined.

2. The method according to claim 1, wherein determining that the first multicast service is unable to be received in the radio resource control (RRC) _INACTIVE state, and transmitting the RRC resume request message to the network device comprises:
determining, after reselecting to a target cell, whether the terminal is able to receive the first multicast service when it is in the RRC _INACTIVE state; and
transmitting the RRC resume request message to the network device in a case that it is determined that the terminal is unable to receive the first multicast service when it is in the RRC _INACTIVE state.

3. The method according to claim 2, wherein the determining whether the terminal is able to receive the first multicast service when it is in the RRC_INACTIVE state comprises:
determining, in a case that the target cell satisfies a first condition, that the terminal is unable to receive the first multicast service when it is in the RRC _INACTIVE state;
wherein the first condition comprises one or more of the following:
not having multicast transmission capability; or,
not supporting the terminal to receive the first multicast service.

4. The method according to claim 3, wherein the non-support for the terminal to receive the first multicast service comprises one of the following:
having multicast capability but not enabling transmission of the first multicast service;
that point-to-multipoint (PTM) transmission is not available for the first multicast service; or,
not supporting the terminal to receive the first multicast service in the RRC _INACTIVE state.

5. The method according to claim 1, wherein the determining that the terminal is unable to receive the first multicast service in the radio resource control (RRC) _INACTIVE state, and transmitting the RRC resume request message to the network device comprises:
determining whether multicast service transmission of a first cell changes, wherein the first cell is a cell on which the terminal camps in RRC_INACTIVE state; and
transmitting the RRC resume request message to the network device in a case that it is determined that the multicast service transmission of the first cell changes.

6. The method according to claim 5, wherein the determining whether the multicast service transmission of the first cell changes comprises:
determining, in a case that the first cell satisfies a second condition, that the multicast service transmission of the first cell changes;
wherein the second condition comprises one or more of the following:
disabling transmission of the first multicast service; or,
disabling a point-to-multipoint (PTM) transmission mode of the first multicast service.

7. The method according to any one of claims 1 to 6, wherein the RRC resume request message comprises: information about interest of the terminal in multicast service;
wherein the information about interest comprises one of the following:
identification information of the first multicast service; or,
indication information that the terminal is interested in the first multicast service or that the terminal has joined the first multicast service.

8. The method according to any one of claims 1 to 6, wherein after the transmitting the RRC resume request message to the network device, the method further comprises:
receiving configuration information transmitted by the network device, wherein the configuration information is used for configuring the terminal to receive the first multicast service;
wherein the configuration information is used for configuring one of the following:
the terminal to receive the first multicast service in an RRC_connected state; or,
the terminal to receive the first multicast service in the RRC _INACTIVE state.

9. A method for service processing, performed by a network device, comprising:
receiving a radio resource control (RRC) resume request message transmitted by a terminal, wherein the RRC resume request message is transmitted in a case that the terminal is unable to receive a first multicast service in an RRC_INACTIVE state, and the first multicast service is at least one of: that the terminal is interested in, or that the terminal has joined; and
transmitting an RRC resume message to the terminal based on the RRC resume request message.

10. The method according to claim 9, wherein after the receiving the radio resource control (RRC) resume request message transmitted by the terminal, the method further comprises:
obtaining context information about the terminal from an anchor base station, to obtain identification information of the first multicast service that the terminal has joined; or,
obtaining context information about a multicast broadcast service from an anchor base station, to obtain identification information of the first multicast service that the terminal has joined.

11. A terminal, comprising a memory, a transceiver, and a processor;
wherein the memory is configured to store a computer program, the transceiver is configured to transmit and receive data under control of the processor, and the processor is configured to read the computer program in the memory to perform following operation:
determining that the terminal is unable to receive a first multicast service in a radio resource control (RRC) _INACTIVE state, and transmitting an RRC resume request message to a network device via the transceiver;
wherein the first multicast service is at least one of: that the terminal is interested in, or that the terminal has joined.

12. The terminal according to claim 11, wherein the processor is configured to read the computer program in the memory to perform following operation:
determining, after reselecting to a target cell, whether the terminal is able to receive the first multicast service when it is in the RRC _INACTIVE state; and
transmitting the RRC resume request message to the network device via the transceiver in a case that it is determined that the terminal is unable to receive the first multicast service when it is in the RRC _INACTIVE state.

13. The terminal according to claim 12, wherein the processor is configured to read the computer program in the memory to perform following operation:
determining, in a case that the target cell satisfies a first condition, that the terminal is unable to receive the first multicast service when it is in the RRC _INACTIVE state;
wherein the first condition comprises one or more of the following:
not having multicast transmission capability; or,
not supporting the terminal to receive the first multicast service.

14. The terminal according to claim 11, wherein the processor is configured to read the computer program in the memory to perform following operation:
determining whether multicast service transmission of a first cell changes, wherein the first cell is a cell on which the terminal camps in RRC _INACTIVE state; and
transmitting the RRC resume request message to the network device in a case that it is determined that the multicast service transmission of the first cell changes.

15. The terminal according to claim 14, wherein the processor is configured to read the computer program in the memory to perform following operation:
determining, in a case that the first cell satisfies a second condition, that the multicast service transmission of the first cell changes;
wherein the second condition comprises one or more of the following:
disabling transmission of the first multicast service; or,
disabling a point-to-multipoint (PTM) transmission mode of the first multicast service.

16. The terminal according to any one of claims 11 to 15, wherein the processor is configured to read the computer program in the memory to perform following operation:
receiving configuration information transmitted by the network device, wherein the configuration information is used for configuring the terminal to receive the first multicast service;
wherein the configuration information is used for configuring one of the following:
the terminal to receive the first multicast service in an RRC_connected state; or,
the terminal to receive the first multicast service in the RRC _INACTIVE state.

17. A network device, comprising a memory, a transceiver, and a processor; wherein the memory is configured to store a computer program, the transceiver is configured to transmit and receive data under control of the processor, and the processor is configured to read the computer program in the memory to perform following operation:
receiving, via the transceiver, a radio resource control (RRC) resume request message transmitted by a terminal, wherein the RRC resume request message is transmitted in a case that the terminal is unable to receive a first multicast service in an RRC_INACTIVE state, and the first multicast service is at least one of: that the terminal is interested in, or that the terminal has joined; and
transmitting an RRC resume message to the terminal via the transceiver based on the RRC resume request message.

18. An apparatus for service processing, applied to a terminal, comprising:
a first transmission unit, configured to determine that the terminal is unable to receive a first multicast service in a radio resource control (RRC) _INACTIVE state, and transmit an RRC resume request message to a network device;
wherein the first multicast service is at least one of: that the terminal is interested in, or that the terminal has joined.

19. An apparatus for service processing, applied to a network device, comprising:
a first reception unit, configured to receive a radio resource control (RRC) resume request message transmitted by a terminal, wherein the RRC resume request message is transmitted in a case that the terminal is unable to receive a first multicast service in an RRC _INACTIVE state, and the first multicast service is at least one of: that the terminal is interested in, or that the terminal has joined; and
a second transmission unit, configured to transmit an RRC resume message to the terminal based on the RRC resume request message.

20. A processor readable storage medium, having a computer program stored thereon, wherein the computer program is configured to cause a processor to perform the method according to any one of claims 1 to 10.
